# EUROPEAN PATENT APPLICATION

(11) **EP 4 742 511 A1**
(43) Date of publication of application: **13.05.2026**
(21) Application number: 24856624.2
(22) Date of filing: 24.06.2024
(51) Int. Cl.: H02K 7/14, H02K 7/08, H02K 9/14, H02K 5/08, H02K 5/16, A47L 9/22

(54) **MOTOR AND CLEANER HAVING SAME**

(30) Priority: 21.08.2023 KR 20230109396
(71) Applicant: Samsung Electronics Co., Ltd., Suwon-si, Gyeonggi-do 16677 (KR)
(72) Inventor: LEE, Geonho, Suwon-si, Gyeonggi-do 16677 (KR); KANG, Wonsoo, Suwon-si, Gyeonggi-do 16677 (KR); KANG, Younmo, Suwon-si, Gyeonggi-do 16677 (KR); KIM, Jimin, Suwon-si, Gyeonggi-do 16677 (KR); PARK, Taesang, Suwon-si, Gyeonggi-do 16677 (KR); CHO, Keeyeon, Suwon-si, Gyeonggi-do 16677 (KR); CHO, Minshin, Suwon-si, Gyeonggi-do 16677 (KR); HAN, Jinwoo, Suwon-si, Gyeonggi-do 16677 (KR); HWANG, Woong, Suwon-si, Gyeonggi-do 16677 (KR)
(74) Representative: Gulde & Partner
(86) International application number: PCT/KR2024/008728
(87) International publication number: WO 2025/042009

(57) **Abstract**

A motor comprising a stator, a bearing and a rotor, which electromagnetically interacts with the stator so as to rotate with respect to a rotary shaft. In addition, the motor includes an impeller, which is coupled to one end of the rotor and rotates so as to generate air flow, and includes a motor body for accommodating the stator, the rotor and the impeller. The motor body includes: a cover part for covering the impeller when the rotor and the impeller are accommodated therein; and a support part for rotatably supporting the rotor. The support part includes: a bearing support part to which the bearing is coupled; and an opening enabling an access to the bearing support part from the outside of the support part. When the impeller is covered by the cover part, the bearing can be disposed to be couplable to the bearing support part, and the opening can be opened toward the outside of the support part in the direction intersecting the direction in which the rotary shaft extends, such that a user approaches the bearing support part through the opening and couples the bearing thereto.

## Description

### [Technical Field]

The present disclosure relates to a motor including a motor body and a motor cover having an improved structure, and a cleaner including the same.

### [Background Art]

Generally, a motor is a machine that obtains rotational force from electrical energy and includes a stator and a rotor. The rotor is configured to electromagnetically interact with the stator and rotates by a force acting between a magnetic field and a current flowing through a coil.

The motor may include a stator, a rotor configured to rotate, a motor body that accommodates the stator and the rotor, and a bearing that supports the rotor to enable stable rotation of the rotor. Additionally, a motor for a cleaner may include an impeller that rotates in combination with the rotor to generate airflow.

A motor cover that covers the motor body may be coupled to the motor body. The motor cover may be coupled to the motor body and protect the motor body from friction caused by components around the motor.

The motor may be disposed within a body of a cleaner to generate power, and may be used in various types of cleaners.

### [Disclosure]

### [Technical Problem]

One aspect of the present disclosure provides a motor of reduced weight and a cleaner including the same.

One aspect of the present disclosure provides a motor with a reduced weight by improving the structure of a motor body, and a cleaner including the same.

One aspect of the present disclosure provides a motor with increased efficiency and a cleaner including the same.

One aspect of the present disclosure provides a motor capable of precisely adjusting the clearance between an impeller and a motor body, and a cleaner including the same.

The technical objectives of the present invention are not limited to the above, and other objectives that are not described above will be clearly understood by those skilled in the art from the above detailed description.

### [Technical Solution]

A motor according to an aspect of the present disclosure includes a stator. The motor includes a bearing. The motor includes a rotor configured to electromagnetically interact with the stator and rotate about a rotation axis. The motor includes an impeller coupled to one end of the rotor and configured to generate air flow by rotation. The motor includes a motor body configured to accommodate the stator, the rotor, and the impeller. The motor body includes: a cover portion configured to cover the impeller; and a support portion configured to rotatably support the rotor, while the rotor and the impeller are accommodated in the motor body. The support portion includes: a bearing support portion to which the bearing is coupled. The support portion includes an opening formed to allow access to the bearing support portion from outside of the support portion.

A cleaner according to an aspect of the present disclosure includes a suction head, a main body communicating with the suction head, and a motor provided inside the main body to form a suction airflow from the suction head to the inside of the main body. The motor includes a stator. The motor includes a rotor configured to electromagnetically interact with the stator and rotate about a rotation axis, and including a bearing. The motor includes an impeller coupled to one end of the rotor and configured to generate air flow by rotation. The motor includes a motor body configured to accommodate the stator, the rotor, and the impeller. The motor body includes: a cover portion configured to cover the impeller; and a support portion configured to rotatably support the rotor, while the rotor and the impeller are accommodated in the motor body. The support portion includes a bearing support portion to which the bearing is coupled. The support portion includes an opening formed to allow access to the bearing support portion from outside of the support portion.

A motor according to an aspect of the present disclosure includes a stator. The motor includes a rotor assembly configured to electromagnetically interact with the stator and rotate about a rotation axis. The motor includes a motor body configured to accommodate the stator and the rotor assembly. The rotor assembly includes a rotor including a bearing and configured to rotate about a rotation axis R, and an impeller coupled to one end of the rotor and configured to generate air flow by rotation. The motor body includes: a cover portion configured to cover the impeller; and a support portion configured to rotatably support the rotor, while the rotor assembly is accommodated in the motor body. The support portion includes: a bearing support portion to which the bearing is coupled; and an opening formed to allow access to the bearing support portion from outside of the support portion.

### [Description of Drawings]

FIG. 1 is a view illustrating a cleaner according to an embodiment.
FIG. 2 is a view illustrating a motor according to an embodiment.
FIG. 3 is a cross-sectional view of a motor according to an embodiment.
FIG. 4 is an enlarged view of area A in FIG. 3.
FIG. 5 is an exploded view of a motor according to an embodiment.
FIG. 6 is a view illustrating a motor body according to an embodiment.
FIG. 7 is a view illustrating the motor body of FIG. 6, when viewed from a different angle.
FIG. 8 is a view illustrating a motor cover according to an embodiment.
FIG. 9 is a view illustrating the motor cover of FIG. 8, when viewed from a different angle.
FIG. 10 is a view illustrating the motor cover coupled to the motor body according to an embodiment.
FIG. 11 is a view illustrating the motor cover coupled to the motor body of FIG. 10, when viewed from a different angle.

### [Modes of the Disclosure]

The embodiments described in the disclosure and the configurations shown in the drawings are only examples of the disclosure, and various modifications may be made at the time of filing of the disclosure to replace the embodiments and drawings of the disclosure.

In the description of the drawings, like numbers refer to like elements throughout the description of the drawings.

The terms used herein are for the purpose of describing the embodiments and are not intended to restrict and/or to limit the disclosure. The singular expressions herein may include plural expressions, unless the context clearly dictates otherwise. In addition, the terms "comprises", "includes", and "has" are intended to indicate that there are features, numbers, steps, operations, elements, parts, or combinations thereof described in the disclosure, and do not exclude the presence or addition of one or more other features, numbers, steps, operations, elements, parts, or combinations thereof.

It will be understood that, although the terms first, second, etc. used in the disclosure may be used herein to describe various components, these components should not be limited by these terms. These terms are only used to distinguish one component from another. For example, a first element could be termed a second element, and similarly, a second element could be termed a first element without departing from the scope of the disclosure. The term "and/or" includes combinations of one or all of a plurality of associated listed items.

Further, as used in the disclosure, the terms "front", "rear", "top", "bottom", "side", "left", "right", "upper", "lower", and the like are defined with reference to the drawings, and are not intended to limit the shape and position of each component.

It will be understood that when a certain component is referred to as being "connected to", "coupled to", "supported by" or "in contact with" another component, it may be directly or indirectly connected to, coupled to, supported by, or in contact with the other component. When a component is indirectly connected to, coupled to, supported by, or in contact with another component, it may be connected to, coupled to, supported by, or in contact with the other component through a third component.

It will also be understood that when a component is referred to as being "on" another component, it may be directly on the other component or intervening components may also be present.

In describing rotational directions, a clockwise direction may be referred to as a first direction, and a counterclockwise direction, which is opposite to the first direction, may be referred to as a second direction. Such terminology may be used for convenience in explaining specific embodiments for carrying out the disclosure, but the rotational directions of the components of the present disclosure are not limited by these terms

Hereinafter, a motor and a cleaner including the same according to various embodiments will be described in detail with reference to the accompanying drawings.

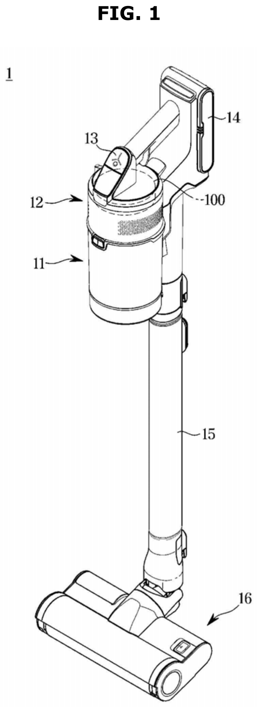

FIG. 1 is a view illustrating a cleaner according to an embodiment.

Referring to FIG. 1, a cleaner 1 according to one of various embodiments of the present disclosure may include a motor 100. In this case, the type of the cleaner 1 is not limited. For example, the motor 100 may be used in a stick-type cleaner 1 or an upright-type cleaner 1. In addition, the motor 100 may be applied to various home appliances in addition to the cleaner 1. Hereinafter, a stick-type cleaner 1 including the motor 100 will be described as an example.

The cleaner 1 may include a main body 12 and a suction head 16. The cleaner 1 may include an extension pipe 15 connecting the main body 12 and the suction head 16 and a handle connected to the main body 12. The main body 12 and the suction head 16 may communicate with each other through the extension pipe 15.

The suction head 16 may be provided at a lower portion of the main body 12 and may be arranged to contact a surface to be cleaned. The suction head 16 may be provided to contact the surface to be cleaned and introduce dust or dirt from the surface to be cleaned into the main body 12 through a suction force generated from the motor 100.

The suction head 16 may include a suction brush and, while being in close contact with the surface to be cleaned, draw in air and foreign substances from the surface to be cleaned. The suction head 16 may be rotatably coupled to the extension pipe 15.

The extension pipe 15 may be formed as a pipe having a predetermined rigidity or as a flexible hose.

The cleaner 1 may include a motor 100. The motor 100 may generate power to generate suction force inside the main body 12. The motor 100 may be provided to form a suction airflow from the suction head 16 to the inside of the main body 12.

The extension pipe 15 may transmit the suction force generated through the motor 100 inside the main body 12 to the suction head 16, and may guide air and foreign substances such as dust drawn through the suction head 16 to the main body 12.

The cleaner 1 may include a dust collection device 11. The dust collection device 11 may be provided to collect dust or dirt drawn from the surface to be cleaned through the suction head 16and moved into the main body 12.

The handle is a portion coupled to the main body 12, and may be provided for the user to grip and manipulate the cleaner 1. The handle may include a manipulation portion 13 that allows the user to manipulate the cleaner 1.

The main body 12 may include the manipulation portion 13. The user may turn the cleaner 1 on/off or adjust the suction intensity by manipulating a power button provided on the manipulation portion 13.

The main body 12 may include a battery 14 provided to supply power for driving the components of the cleaner 1.

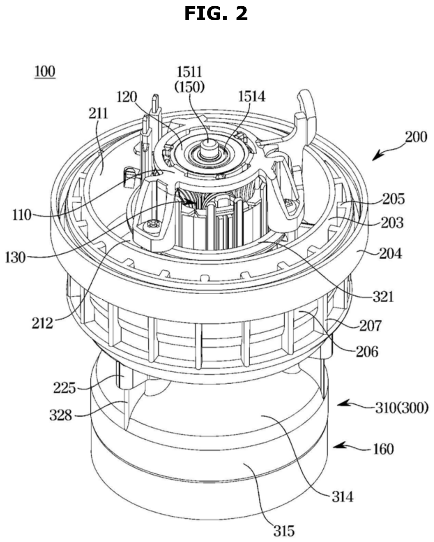

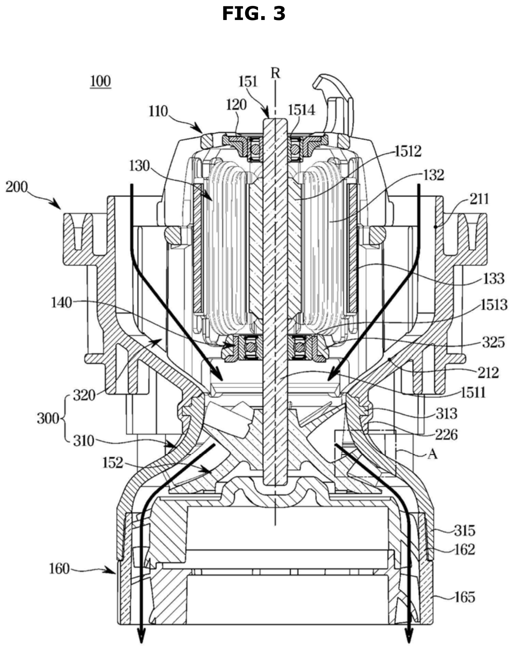

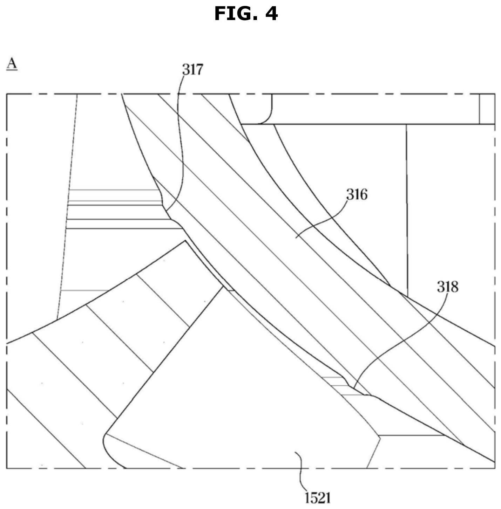

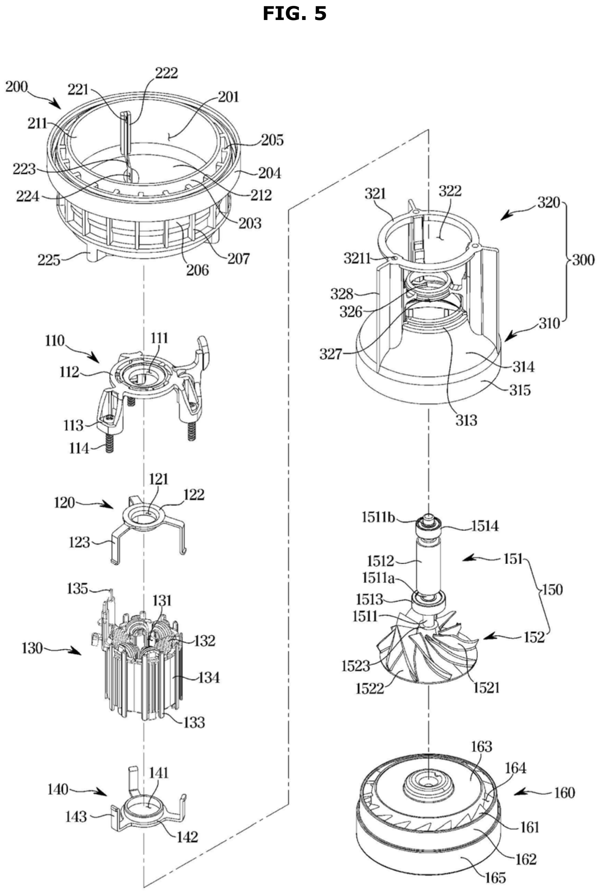

FIG. 2 is a view illustrating a motor according to an embodiment. FIG. 3 is a cross-sectional view of a motor according to an embodiment. FIG. 4 is an enlarged view of area A in FIG. 3. FIG. 5 is an exploded view of a motor according to an embodiment.

Referring to FIGS. 2 to 5, the motor 100 may include a stator 130, a rotor 151, and an impeller 152. The motor 100 may include a motor body 300 provided to accommodate the stator 130, the rotor 151, and the impeller 152.

The stator 130 may include a stator core 134, a stator coil 132, an insulator 133, and a rotor accommodation portion 131. The stator 130 may be configured to generate magnetic flux when current is applied to the stator coil 132.

The stator core 134 may be provided in a central part with a rotor accommodation portion 131 for accommodating the rotor 151. The rotor 151 may be disposed in the rotor accommodation portion 131. The rotor 151 may electromagnetically interact with the stator 130.

The stator coil 132 may be wound around the stator core 134 with the insulator 133 coupled to the stator core 134.

The insulator 133 may be formed of an electrically insulating material. The insulator 133 may surround the stator core 134 to insulate the stator core 134 from the stator coil 132.

The stator 130 may further include an insertion portion 135 provided at the lower end of the insulator 133. The insertion portion 135 may be provided to be inserted into a control unit.

The rotor 151 may include a rotor body 1511. The rotor body 1511 may include a cylindrical shape extending in the direction of a rotation axis R on which the rotor 151 rotates, but is not limited thereto.

The rotor 151 may include a rotor core 1512 provided to rotate inside the stator 130. The rotor core 1512 may be provided as a permanent magnet having magnetism, or may include a coil having electromagnetic properties. Accordingly, the rotor 151 may be provided to be rotatable about the rotation axis R by electromagnetically interacting with the stator 130. The rotor core 1512 may be located on a middle side of the rotor body 1511. In one embodiment of the present disclosure, the rotor core 1512 is assumed to be provided as a permanent magnet.

The rotor 151 may include a bearing 1513. The bearing 1513 may be disposed on the rotor body 1511 to rotatably support the rotor 151. More specifically, the bearing 1513 may be disposed on a first side 1511a adjacent to one end of the rotor body 1511. As will be described below, an impeller 152 may be coupled to one end of the rotor body 1511. The bearing 1513 may be positioned between the rotor core 1512 and the impeller 152. A direction from the bearing 1513 toward the impeller 152 may be defined as a downward direction. That is, the impeller 152 may be positioned below the bearing 1513 relative to the rotor body 1511.

The rotor 151 may include an additional bearing 1514. The additional bearing 1514 may be disposed on the rotor body 1511 to rotatably support the rotor 151. More specifically, the additional bearing 1514 may be disposed on a second side 1511b adjacent to the other end of the rotor body 1511. That is, the additional bearing 1514 may be disposed on the rotor body 1511 on the opposite side of the bearing 1513 with respect to the rotor core 1512. The additional bearing 1514 may be positioned above the rotor body 1511 relative to the bearing 1513.

The impeller 152 may include a rotor coupling portion 1523 to which the rotor 151 is coupled. When the rotor 151 is coupled to the rotor coupling portion 1523, the impeller 152 may rotate together with the rotor 151. The impeller 152 may be coupled to one end of the rotor 151. The impeller 152 may generate air flow by being coupled to the rotor 151 and rotating.

The impeller 152 may include a hub 1522 and a plurality of blades 1521 protruding from the hub 1522 to form air flow.

The hub 1522 may be provided with it's a cross-sectional area that decreases along the axial direction of the rotor 151. The hub 1522 may be provided to allow air introduced in the axial direction to be discharged in the radial direction of the rotor 151. Specifically, when the rotor 151 is arranged to extend in an up-down direction, the hub 1522 may be provided with a cross-sectional area that decreases toward the upper side. In other words, the hub 1522 may be formed to extend from an outer surface of the rotor coupling portion 1523 such that the rotor coupling portion 1523 is positioned at the center. In this case, a direction in which the hub 1522 extends from the outer surface of the rotor coupling portion 1523 may be defined as an outward direction.

The impeller 152 may include a plurality of blades 1521 protruding from one surface of the hub 1522. The plurality of blades 1521 may be provided to form airflow by rotating together with the hub 1522. The plurality of blades 1521 may be provided on the outer surface of the hub 1522. The plurality of blades 1521 and the hub 1522 may be integrally formed.

The impeller 152 may cause air introduced from above the hub 1522 to be discharged radially outward of the rotor 151 by having the plurality of blades 1521.

The motor 100 may include a diffuser 160. The diffuser 160 may include a diffuser body 165 forming the outer shape of the diffuser 160. The diffuser 160 may include a diffuser top surface 163. The diffuser 160 may include a diffuser flow path 164. The diffuser flow path 164 may be formed along the outer circumference of the diffuser top surface 163.

The diffuser 160 may include a diffuser vane 161. The diffuser vane 161 may be provided in plurality. The diffuser vane 161 may be arranged to be inserted into the diffuser flow path 164.

The diffuser 160 may be disposed below the impeller 152. Therefore, air discharged radially outward of the rotor 151 by the impeller 152 may flow into the diffuser flow path 164, have its direction changed by the diffuser vanes 161, and then be discharged downward from the diffuser 160. The diffuser 160 may include a cover portion coupling portion 162 (to be described below). A detailed description of the cover portion coupling portion 162 will be provided below.

The motor 100 may include a motor body 300 that accommodates the stator 130, the rotor 151, and the impeller 152. The motor 100 may include a cover member 110. The motor 100 may include an upper fixing member 120 that supports the stator 130 on the motor body 300. The motor 100 may include a lower fixing member 140 that supports the stator 130 on the motor body 300. The motor 100 may include a motor cover 200 that is coupled toto the motor body 300 to cover the motor body 300.

The motor body 300, may include a cover portion 310 provided to cover the impeller 152 while the rotor 151 and the impeller 152 are accommodated in the motor body 300.

The cover portion 310 may include an impeller cover 314 provided to surround and cover the impeller 152. The impeller cover 314 may be formed to have a shape that widens downward while the rotor 151 and impeller 152 are accommodated in the motor body 300. For example, the impeller cover 314 may include a roughly hemispherical shape with a lower side open, but the shape of the impeller cover 314 is not limited thereto.

The cover portion 310 may include a diffuser coupling portion 315. The diffuser coupling portion 315 may be provided to extend downward from an outer periphery of the impeller cover 314. The cover portion coupling portion 162 of the diffuser 160 may be inserted into the diffuser coupling portion 315. Through this, the diffuser 160 may be coupled to the cover portion 310 and thus to the motor body 300.

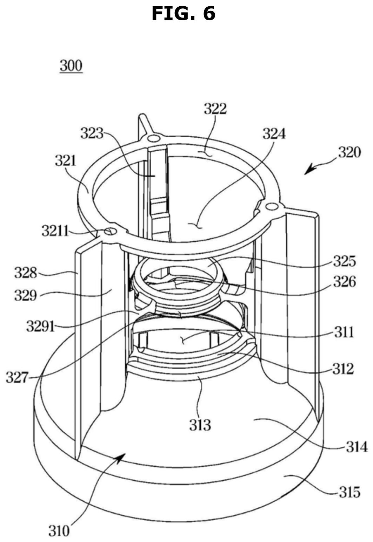

The cover portion 310 may include a motor body hole 311 (see FIG. 6). The motor body hole 311 may be provided above the impeller cover 314. The motor body hole 311 may be formed above the impeller cover 314 and may be provided to allow air communication to the diffuser 160.

Protruding ribs 316 and 317 may be formed on a cover portion inner circumferential surface 316. The protruding ribs 316 and 317 may be provided to protrude inward along the cover portion inner circumferential surface 316.

The protruding ribs 316 and 317 may include a first protruding rib 317 and a second protruding rib 318. The first protruding rib 317 may be formed closer to the motor body hole 311 than the second protruding rib 318.

The cover portion 310 may include a motor cover coupling portion 312. The motor cover coupling portion 312 may be formed along the outer circumference of the motor body hole 311. The motor cover 200 may be coupled to the motor body 300 through the motor cover coupling portion 312. More specifically, the motor cover coupling portion 312 may include a first coupling portion 313. The first coupling portion 313 may be formed to protrude outward from the motor cover coupling portion 312. In other words, the first coupling portion 313 may be formed to protrude outward along the outer circumference of the motor cover coupling portion 312. The first coupling portion 313 may be provided to be inserted into the motor cover 200. Through this, the motor cover 200 may be coupled to the motor cover coupling portion 312 of the motor body 300. Therefore, the motor cover 200 may be coupled to the motor body 300.

The motor body 300 may include a support portion 320. The support portion 320 may rotatably support the rotor 151 while the rotor 151 and the impeller 152 are accommodated in the motor body 300. The support portion 320 may accommodate the stator 130. The support portion 320 may be formed to protrude from the cover portion 310 and extend upward.

The support portion 320 may include a support bar 329. The support bar 329 may be formed to extend from the cover portion 310 in a direction parallel to the direction in which the rotation axis R of the rotor 151 extends. The support bar 329 may include a plurality of support bars 329 extending from the cover portion in a direction parallel to the direction in which the rotation axis R of the rotor 151 extends, and spaced apart from each other along the outer circumferential surface of the cover portion 310. The spacing between the plurality of support bars 329 may be uniform. In the drawing, three support bars 329 are shown, but the number of support bars 329 may vary.

The plurality of support bars 329 may be arranged along the outer circumference of the motor body hole 311. Therefore, the motor body hole 311 may be positioned in a space between the plurality of support bars 329.

The support portion 320 may include a support rib 328. The support rib 328 may be formed to protrude from the support bar 329. The support rib 328 may be formed to protrude from the support bar 329 in a direction crossing the direction in which the rotation axis R extends. In other words, the support rib 328 may be formed to protrude outward from the support bar 329.

The support rib 328 may be formed to extend along the direction in which the support bar 329 extends and may be connected to the cover portion 310. That is, the support rib 328 may be formed to protrude from the cover portion 310 and extend along the direction in which the support bar 329 extends. Since the support rib 328 protrudes outward from the support bar 329, the support rib 328 may protrude farther outwards of the cover portion 310 than the support bar 329.

The support portion 320 may include a bearing support portion 325. The bearing 1513 of the rotor 151 may be coupled to the bearing support portion 325. The bearing support portion 325 may be arranged to be surrounded by the plurality of support bars 329. The bearing support portion 325 may be arranged to be spaced apart from the cover portion 310. The bearing support portion 325 may be arranged above the cover portion 310 and spaced apart from the cover portion 310. While the stator 130 is accommodated in the support portion 320, the bearing support portion 325 may be positioned between the stator 130 and the cover portion 310. Therefore, the bearing support portion 325 may be provided to be accessible from the outside of the motor body 300 regardless of the cover portion 310.

The bearing support portion 325 may be arranged to be spaced apart from the cover portion 310 by being supported by the support bar 329. More specifically, the support portion 320 may include a bearing support portion connecting bar 3291 formed to protrude inward from the support bar 329. The bearing support portion connecting bar 3291 may be provided to protrude inward from a middle region of the support bar 329 so as to be spaced apart from the cover portion 310. The bearing support portion 325 may be connected to the bearing support portion connecting bar 3291. Therefore, the bearing support portion 325 may be spaced apart from the cover portion 310.

When the bearing 1513 is coupled to the bearing support portion 325, the rotor 151 and the impeller 152 may be rotatably coupled to the motor cover 200. The bearing support portion 325 may include a bearing support portion through-hole 326. While the bearing 1513 is coupled to the bearing support portion 325, the rotor 151 may be arranged to pass through the bearing support portion through-hole 326. Then, the rotor 151 may be provided to pass downward through the motor body hole 311 of the cover portion 310.

The support portion 320 may include an insertion hole forming rib 321. The insertion hole forming rib 321 may form a stator insertion hole 322 into which the stator 130 may be inserted. That is, the stator 130 may be inserted into the support portion 320.

The support portion 320 may include a stator seating groove 324 in which the inserted stator 130 may be seated. The support portion 320 may include a stator support portion 323 that stably supports the seated stator 130 on the support portion 320.

The insertion hole forming rib 321 may be formed to protrude from the upper portion of the support bar 329. More specifically, the insertion hole forming rib may be formed to protrude from the upper portion of each of the plurality of support bars 329 in a direction crossing the direction in which the rotation axis R extends to connect the plurality of support bars 329. Through this, the insertion hole forming rib 321 may be formed to include a roughly ring shape. The stator insertion hole 322 may be formed at the center of the insertion hole forming rib 321.

The stator seating groove 324 may be formed below the stator insertion hole 322. A space surrounded by the plurality of support bars 329 may form part of the stator seating groove 324. More specifically, inner side surfaces of the plurality of support bars 329 may form a side surface of the stator seating groove 324.

The inner side surface of the support bar 329 arranged to face the stator seating groove 324 may form the stator support portion 323. Therefore, since the stator 130 may be accommodated in the stator seating groove 324, and the side surface of the stator 130 may be supported by the stator support portion 323, the stator 130 may be accommodated more stably. In addition, while the stator 130 is accommodated in the stator seating groove 324, the insertion hole forming rib 321 may contact the side surface of the stator 130 to support the stator 130.

The stator seating groove 324 may be formed above the bearing support portion 325. That is, when the stator 130 is seated in the stator seating groove 324, the stator 130 may be accommodated to be positioned above the bearing support portion 325.

The lower fixing member 140 may be coupled to the stator 130 to cover a lower portion of the stator 130. The lower fixing member 140 may include a lower fixing member body 142 forming the outer shape thereof. The lower fixing member body 142 may include a roughly ring shape including a lower fixing member hole 141 at the center. The lower fixing member 140 may include a lower fixing member connecting portion 143. The lower fixing member connecting portion 143 may be formed to extend upward from the outer circumferential surface of the lower fixing member body 142.

The lower fixing member 140 may be coupled to the stator 130 so that the lower fixing member hole 141 communicates with the bearing hole to cover the lower portion of the stator 130. More specifically, the lower fixing member 140 may be fixed to the support portion 320 as the lower fixing member body 142 is inserted into the bearing hole. The lower fixing member connecting portion 143 may contact the side surface of the stator to support the stator 130. Therefore, the stator 130 may be supported on the support portion 320 by the lower fixing member 140.

The cover member 110 may be coupled to the insertion hole forming rib 321 to cover the upper side of the stator 130 accommodation groove. The cover member 110 may include a cover member body 112 forming the outer shape. The cover member body 112 may include a roughly ring shape including an additional bearing support portion 111 at the center. The cover member 110 may include a cover member connecting portion 113 formed to extend downward from the outer circumferential surface of the cover member body 112. The cover member connecting portion 113 may be coupled to the insertion hole forming rib 321 through a coupling member insertion portion 3211 formed on the insertion hole forming rib 321. The cover member connecting portion 113 and the insertion hole forming rib 321 may be coupled by a coupling member 114 such as a screw, but the coupling method is not limited thereto. As the cover member connecting portion 113 is coupled to the insertion hole forming rib 321, the cover member 110 may be supported by the support portion 320.

The upper fixing member 120 may be coupled to the stator 130 to cover an upper portion of the stator 130. The upper fixing member 120 may include an upper fixing member body 122 forming the outer shape thereof. The upper fixing member body 122 may include a roughly ring shape including an upper fixing member hole 121 at the center. The upper fixing member 120 may include an upper fixing member connecting portion 123. The upper fixing member connecting portion 123 may be formed to extend downward from the outer circumferential surface of the upper fixing member body 122.

The upper fixing member 120 may be coupled to the stator 130 so that the upper fixing member hole 121 communicates with the additional bearing support portion 111 to cover the upper side of the stator 130. More specifically, the upper fixing member 120 may be fixed to the support portion 320 as the upper fixing member body 122 is inserted into the additional bearing support portion 111 and fixed to the cover member 110.

The upper fixing member connecting portion 123 may contact the side surface of the stator to support the stator 130. Therefore, the stator 130 may be supported on the support portion 320 by the upper fixing member 120. The additional bearing 1514 may be coupled to the additional bearing support portion 111 by being inserted into the upper fixing member hole. Therefore, the additional bearing 1514 may be coupled to the cover member 110 to rotatably support the rotor 151.

Hereinafter, a process of assembling the motor 100 will be examined in detail.

An impeller 152 may be coupled to one end of the rotor body 1511. A bearing 1513 may be disposed on a first side 1511a adjacent to one end of the rotor body 1511, and an additional bearing 1514 may be disposed on a second side 1511b adjacent to the other end of the rotor body 1511. A rotor core 1512 may be disposed on the rotor body 1511 to be positioned between the bearing 1513 and the additional bearing 1514. The rotor 151 and the impeller 152 coupled to the rotor 151 may be defined as a rotor assembly 150. The rotor assembly 150 may be provided to rotate by electromagnetically interacting with the stator 130.

The rotor assembly 150 may be accommodated in the motor body 300 by being arranged with the second side 1511b facing upward and the impeller 152 facing downward, and being inserted into the rotor body 1511 from below. While the motor body 300 accommodates the rotor assembly 150, the cover portion 310 may accommodate the impeller 152.

While the rotor assembly 150 is accommodated in the motor body 300, the lower fixing member 140, the stator 130, the upper fixing member 120, and the cover member 110 may be in a state coupled to the rotor body 1511.

When the rotor assembly 150 is inserted into the motor body 300, the rotor body 1511 may be inserted into the motor body 300 while passing through the motor body hole 311, the bearing support portion through-hole 326, the lower fixing member hole 141, the rotor accommodation portion 131, the upper fixing member hole 121, and the additional bearing support portion 111 in order.

The impeller 152 may be covered by the cover portion 310 so as to contact the first protruding rib 317 formed along the cover portion inner circumferential surface 316. The impeller 152 may be covered by the cover portion 310 so as to contact the second protruding rib 318 formed along the cover portion inner circumferential surface 316. Afterwards, when the impeller 152 rotates, the impeller 152 may contact the first protruding rib 317 and the second protruding rib 318, but the first protruding rib 317 and the second protruding rib 318 may be worn by contact with the impeller 152 and provided so as not to contact the impeller 152.

The distance by which the impeller 152 is spaced from the cover portion inner circumferential surface 316 may be adjusted by the positions and protrusion amounts of the first protruding rib 317 and the second protruding rib 318 arranged on the cover portion inner circumferential surface 316.

After the impeller 152 is covered by the cover portion 310, the bearing 1513 may be coupled to the bearing support portion 325. That is, the rotor assembly 150 may be coupled to the motor body 300 after the distance by which the impeller 152 and the cover portion inner circumferential surface 316 are spaced is adjusted. Since the bearing support portion 325 is not covered by the cover portion 310 and is spaced apart from the cover portion 310, the bearing support portion 325 may be provided to be accessible from the outside of the motor body 300. Therefore, even after the impeller 152 is accommodated, the user may access the bearing support portion 325 from the outside of the motor body 300 and couple the bearing 1513 to the bearing support portion 325. Through this, it is possible to adjust the position of the impeller 152 by allowing the rotor assembly 150 to be coupled after adjusting the distance by which the impeller 152 and the cover portion inner circumferential surface 316 are spaced as desired by the user. The user may access the bearing support portion 325 from the outside through the opening 327 (see FIG. 6) and couple the bearing 1513. A detailed description of this will be provided below.

After the bearing 1513 is coupled to the bearing support portion 325, the additional bearing 1514 may be coupled to the additional bearing support portion 111. Afterwards, the motor cover 200 may be coupled to the motor body 300 to cover the motor body 300.

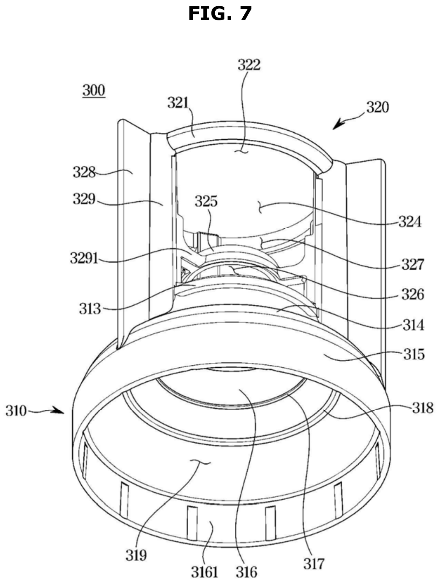

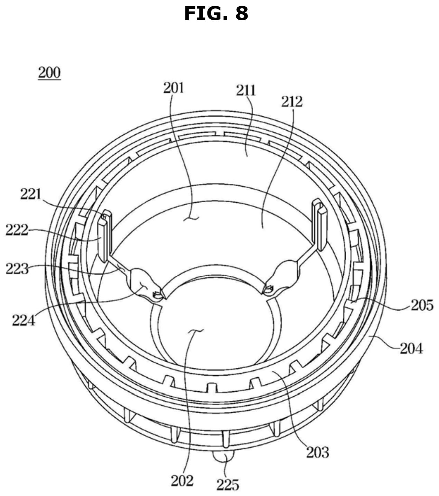

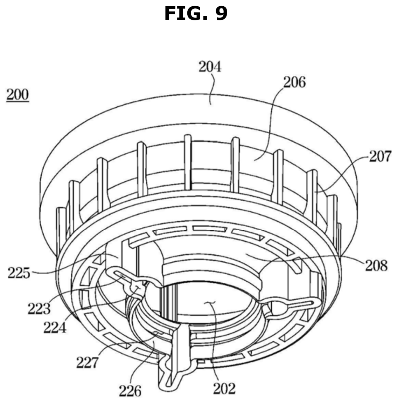

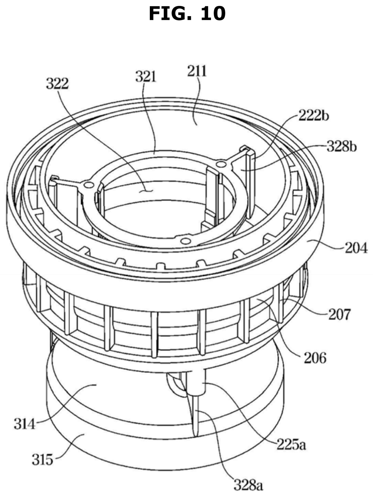

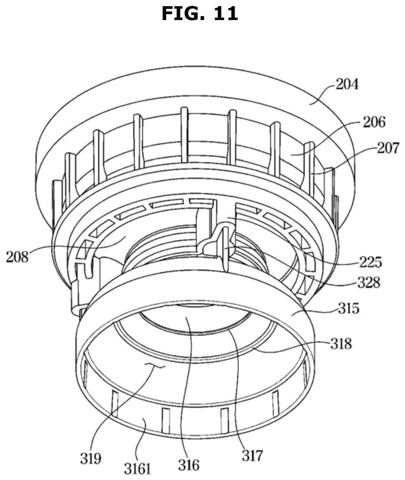

FIG. 6 is a view illustrating a motor body according to an embodiment. FIG. 7 is a view illustrating the motor body of FIG. 6, when viewed from a different angle. FIG. 8 is a view illustrating a motor cover according to an embodiment. FIG. 9 is a view illustrating the motor cover of FIG. 8, when viewed from a different angle. FIG. 10 is a view illustrating the motor cover coupled to the motor body according to an embodiment. FIG. 11 is a view illustrating the motor cover coupled to the motor body of FIG. 10, when viewed from a different angle.

Referring to FIGS. 6 to 11, the support portion 320 may include an opening 327. The opening 327 may be formed to allow access to the bearing support portion 325 from the outside of the support portion 320. The opening 327 may be formed in a direction crossing the direction in which the rotation axis R extends on the support portion 320. The opening 327 may be formed between the plurality of support bars 329 that are spaced apart. After the user covers the impeller 152 with the cover portion 310 and adjusts the distance by which the impeller 152 and the cover portion inner circumferential surface 316 are spaced, the user may access the bearing support portion 325 from the outside of the motor body 300 through the opening 327 to couple the bearing 1513. In other words, while the impeller 152 is covered by the cover portion 310, the bearing 1513 may be arranged to be coupleable to the bearing support portion 325, and the user may access the bearing support portion 325 through the opening 327 and couple the bearing 1513 to the bearing support portion 325. Methods for the user to couple the bearing 1513 to the bearing support portion 325 may include applying adhesive, etc., but this is only one example, and the method for the user to couple the bearing 1513 to the bearing support portion 325 may be provided in various ways.

The motor cover 200 may include a motor cover housing 203 forming the outer shape. The motor cover housing 203 may include a roughly cylindrical shape, but is not limited thereto.

The motor cover 200 may include a housing edge portion 204. The motor cover 200 may include a connecting rib 205 formed to protrude radially from the motor cover housing 203. The housing edge portion 204 may be connected to the connecting rib 205 and thereby connected to the motor cover housing 203.

The motor cover 200 may include a motor housing side portion 206. The motor cover 200 may include a housing support portion 207 formed on the motor housing side portion 206 and arranged to extend in the vertical direction.

The motor cover 200 may include an air inlet 201 formed to be open at an upper side of the motor cover housing 203. The motor cover 200 may include a motor cover hole 202 formed to communicate with the air inlet 201 and be open at a lower side of the motor cover housing 203.

The motor cover 200 may include a first guide surface 211 and a second guide surface 212 formed on the inner surface of the motor cover housing 203. When the motor cover 200 is coupled to the motor body 300, the first guide surface 211 may be provided to be spaced apart from the support portion 320 and cover the support portion 320.

The second guide surface 212 may be bent from the first guide surface 211 toward the impeller 152 and extend downward. In other words, the second guide surface 212 may be formed to extend from the first guide surface 211 so that the inner surface of the motor cover 200 narrows from the support portion 320 toward the cover portion 310.

The motor cover hole 202 may be arranged to communicate with the motor body hole 311 of the motor body 300.

When the rotor assembly 150 rotates and the impeller 152 causes air to flow from top to bottom, air may flow into the motor cover housing 203 through the motor cover hole 202. The air introduced into the motor cover housing 203 may be guided by the first guide surface 211 and the second guide surface 212 toward the motor cover hole 202 and discharged to the outside of the motor cover 200. The discharged air may be introduced into the motor body hole 311 of the motor body 300, and after passing through the impeller 152, may be discharged through an air outlet provided to be open at a lower side of the cover portion 310 (see FIG. 2).

The motor cover 200 may include a support groove 222 formed on the inner surface of the motor cover 200. The support groove 222 may be formed to extend in a direction parallel to the direction in which the rotation axis R extends, on the first guide surface 211.

The support groove 222 may include a support groove cutout 221 formed by being cut open toward the inner surface of the motor cover housing 203. The support groove cutout 221 may be formed to extend along the support groove 222 in a direction parallel to the direction in which the rotation axis R extends.

While the motor cover 200 is coupled to the motor body 300, the support rib 328 of the motor body 300 may be inserted into the support groove 222 of the motor cover 200. Therefore, the motor cover 200 may be supported on the motor body 300 and coupled to the motor body 300.

The support groove 222 may include a plurality of support grooves 222 formed along the inner circumferential surface of the motor cover 200. Each of the plurality of support ribs 328 may be inserted into each of the plurality of support grooves 222.

The motor cover 200 may include a motor cover extension portion 225 formed to extend downward. The motor cover extension portion 225 may be formed to protrude downward from a housing bottom surface 208 on which the second guide surface 212 is formed.

The motor cover 200 may include through-holes 223 and 224 formed in the second guide surface 212 to allow the support bar 329 and the support rib 328 to pass therethrough through while the motor cover 200 is coupled to the motor body 300. More specifically, the motor cover extension portion 225 may include a support rib through-hole 223 and a support through-hole 224 formed to be open downward. The support rib through-hole 223 and the support through-hole 224 may communicate with each other.

The motor cover 200 may include a motor body coupling portion 226 formed to extend downward. The motor body coupling portion 226 may be formed to protrude downward from the housing bottom surface 208. More specifically, the motor body coupling portion 226 may be formed to protrude downward from the housing bottom surface 208 to form the motor cover hole 202 that communicates with the air inlet 201.

The support rib through-hole 223 and the support through-hole 224 may be provided to be connected to the motor cover hole 202.

The motor body coupling portion 226 may include a second coupling portion 227. The first coupling portion 313 of the motor body 300 may be coupled to the second coupling portion 227. For example, the first coupling portion 313 may be formed to protrude outward, and the second coupling portion 227 may be formed to be recessed outward in the motor body coupling portion 226 so that the first coupling portion 313 and the second coupling portion 227 may be coupled to each other.

While the motor cover 200 is coupled to the motor body 300, the support bar 329 of the motor body 300 may be provided to be inserted into the support through-hole 224 of the motor cover 200. While the motor cover 200 is coupled to the motor body 300, the support rib 328 of the motor body 300 may be provided to be inserted into the support rib through-hole 223 of the motor cover 200. Therefore, the motor cover 200 may be more stably seated on the motor body 300.

A motor 100 according to an embodiment includes a stator 130. The motor 100 includes a bearing 1513. The motor 100 includes a rotor 151 configured to electromagnetically interact with the stator 130 and rotate about a rotation axis R. The motor 100 includes an impeller 152 coupled to one end of the rotor 151 and configured to generate air flow by rotation. The motor 100 includes a motor body 300 configured to accommodate the stator 130, the rotor 151, and the impeller 152. The motor body 300 includes: a cover portion 310 configured to cover the impeller 152; and a support portion 320 configured to rotatably support the rotor 151, while the rotor 151 and the impeller 152 are accommodated in the motor body 300. The support portion 320 includes a bearing support portion 325 to which the bearing 1513 is coupled. The support portion 320 includes an opening 327 formed to allow access to the bearing support portion 325 from outside of the support portion 320.

While the cover portion 310 covers the impeller 152, the bearing 1513 may be arranged to be coupleable with the bearing support portion 325. The opening 327 may be open toward the outside of the support portion 320 in a direction crossing a direction in which the rotation axis R extends such that a user accesses the bearing support portion 325 through the opening 327 and couples the bearing 1513 to the bearing support portion 325, and the bearing support portion 325 may be spaced apart from the cover portion 310 toward the opening 327.

The stator 130 may be configured to be accommodated in the support portion 320. The bearing support portion 325 may be configured to be positioned between the stator 130 and the cover portion 310 while the stator 130 is accommodated in the support portion 320.

The motor 100 may further include a motor cover 200 coupled to the motor body 300 to cover the motor body 300. The motor cover 200 may include a guide surface configured to guide air to the impeller 152 when the impeller 152 rotates.

The guide surface may include a first guide surface 211 spaced apart from the support portion 320 and configured to cover the support portion 320. The guide surface may include a second guide surface 212 bent from the first guide surface 211 toward the impeller 152 and extending.

The second guide surface 212 may be formed to extend from the first guide surface 211 such that an inner surface of the motor cover 200 narrows from the support portion 320 toward the cover portion 310.

The cover portion 310 may include a first coupling portion 313 formed along an outer circumferential surface of the cover portion 310. The motor cover 200 may include a second coupling portion 227 formed along an inner circumferential surface of the motor cover 200. The first coupling portion 313 and the second coupling portion 227 may be coupled to each other to couple the motor cover 200 to the motor body 300.

The support portion 320 may include a support bar 329 extending from the cover portion 310 in a direction parallel to a direction in which the rotation axis R extends. The support portion 320 may include a support rib 328 formed to protrude from the support bar 329 in a direction crossing the direction in which the rotation axis R extends and configured to support the motor cover 200.

The motor cover 200 may include a support groove 222 formed on an inner surface of the motor cover 200. The support rib 328 may be inserted into the support groove 222 to support the motor cover 200 on the support portion 320.

The support groove 222 may be formed to extend on the first guide surface 211 in a direction parallel to a direction in which the rotation axis R extends.

The motor cover 200 may further include through-holes 223, 224 formed in the second guide surface 212 such that, while the motor cover 200 is coupled to the motor body 300, the support bar 329 and the support rib 328 pass through the through-holes 223, 224.

The support portion 320 may further include a plurality of support bars 329 that are spaced apart from the cover portion 310 along an outer circumferential surface of the cover portion 310 in a direction parallel to a direction in which the rotation axis R extends. The opening 327 may be formed between the plurality of support bars 329 spaced apart from each other.

The rotor 151 may further include an additional bearing 1514 configured to rotatably support the rotor 151. The motor body 300 may further include a stator insertion hole 322 formed in the support portion 320 such that the stator 130 is inserted therein. The motor body 300 may further include a cover member 110 coupled to the support portion 320 to cover the stator insertion hole 322. The additional bearing 1514 may be configured to be coupled to the cover member 110 to rotatably support the rotor 151.

The support portion 320 may further include an insertion hole forming rib 321 arranged along an outer circumference of the stator insertion hole 322 to form the stator insertion hole 322. The stator 130 may be configured to be supported by the insertion hole forming rib 321 while inserted into the stator insertion hole 322.

The cover portion 310 may further include a protruding rib 317, 318 protruding inward along an inner circumferential surface of the cover portion 310. While the impeller 152 is covered by the cover portion 310, the impeller 152 may be arranged to contact the protruding rib 317, 318.

A cleaner 1 according to an embodiment includes a suction head 16, a main body 12 communicating with the suction head 16, and a motor 100 provided inside the main body 12 to form a suction airflow from the suction head 16 to the inside of the main body 12. The motor 100 includes a stator 130. The motor 100 includes a rotor 151 configured to electromagnetically interact with the stator 130 and rotate about a rotation axis R, and including a bearing 1513. The motor 100 includes an impeller 152 coupled to one end of the rotor 151 and configured to generate air flow by rotation. The motor 100 includes a motor body 300 configured to accommodate the stator 130, the rotor 151, and the impeller 152. The motor body 300 includes: a cover portion 310 configured to cover the impeller 152; and a support portion 320 configured to rotatably support the rotor 151, while the rotor 151 and the impeller 152 are accommodated in the motor body 300. The support portion 320 includes a bearing support portion 325 to which the bearing 1513 is coupled. The support portion 320 includes an opening 327 formed to allow access to the bearing support portion 325 from outside of the support portion 320.

While the cover portion 310 covers the impeller 152, the bearing 1513 may be arranged to be coupleable with the bearing support portion 325. The opening 327 may be open toward the outside of the support portion 320 in a direction crossing a direction in which the rotation axis R extends such that a user accesses the bearing support portion 325 through the opening 327 and couples the bearing 1513 to the bearing support portion 325, and the bearing support portion 325 may be spaced apart from the cover portion 310 toward the opening 327.

The motor 100 may further include a motor cover 200 coupled to the motor body 300 to cover the motor body 300. The motor cover 200 may include guide surfaces 211, 212 configured to guide air to the impeller 152 when the impeller 152 rotates. The guide surfaces 211, 212 may include a first guide surface 211 spaced apart from the support portion 320 and configured to cover the support portion 320. The guide surfaces 211, 212 may include a second guide surface 212 bent from the first guide surface 211 toward the impeller 152 and extending.

The support portion 320 may include a support bar 329 extending from the cover portion 310 in a direction parallel to a direction in which the rotation axis R extends. The support portion 320 may include a support rib 328 formed to protrude from the support bar 329 in a direction crossing the direction in which the rotation axis R extends and configured to support the motor cover 200. The motor cover 200 may include a support groove 222 formed on an inner surface of the motor cover 200. The support rib 328 may be inserted into the support groove 222 to support the motor cover 200 on the support portion 320.

A motor 100 according to an embodiment includes a stator 130. The motor 100 includes a rotor assembly 150 configured to electromagnetically interact with the stator 130 and rotate about a rotation axis R. The motor 100 includes a motor body 300 configured to accommodate the stator 130 and the rotor assembly 150. The rotor assembly 150 includes a rotor 151 including a bearing 1513 and configured to rotate about a rotation axis R, and an impeller 152 coupled to one end of the rotor 151 and configured to generate air flow by rotation. The motor body 300 includes: a cover portion 310 configured to cover the impeller 152; and a support portion 320 configured to rotatably support the rotor 151, while the rotor assembly 150 is accommodated in the motor body 300. The support portion 320 includes: a bearing support portion 325 to which the bearing 1513 is coupled; and an opening 327 formed to allow access to the bearing support portion 325 from outside of the support portion 320.

According to the concept of the present disclosure, the motor body does not include a structure to guide air, and therefore the motor can be reduced in weight as the motor body becomes lighter.

According to the concept of the present disclosure, the bearing support portion of the motor body is provided to be accessible from the outside. Thus, after inserting the rotor equipped with the impeller into the motor body and adjusting the clearance between the impeller and the motor body, the bearing coupled to the rotor may be coupled to the bearing support portion of the motor body to fix the rotor to the motor body, allowing more precise adjustment of the clearance between the impeller and the motor body.

The effects of the present invention are not limited to those described above, and other effects that are not described above will be clearly understood by those skilled in the art from the above detailed description.

While the disclosure has been shown and described with reference to various embodiments thereof, it will be understood by those skilled in the art that various changes in form and details may be made therein without departing from the spirit and scope of the disclosure as defined by the appended claims and their equivalents.

## Claims

1. A motor comprising:
a stator;
a rotor including a bearing and configured to electromagnetically interact with the stator and rotate about a rotation axis;
an impeller coupled to one end of the rotor and configured to generate air flow by rotation; and
a motor body configured to accommodate the stator, the rotor, and the impeller;
wherein the motor body includes:
when the rotor and the impeller are accommodated in the motor body,
a cover portion configured to cover the impeller; and
a support portion configured to rotatably support the rotor,
wherein the support portion includes:
a bearing support portion to which the bearing is coupled; and
an opening formed to allow access to the bearing support portion from outside of the support portion.

2. The motor of claim 1, wherein while the cover portion covers the impeller, the bearing is arranged to be coupleable with the bearing support portion, and
wherein the opening is open toward the outside of the support portion along a direction crossing a direction along which the rotation axis extends such that a user accesses the bearing support portion through the opening and couples the bearing to the bearing support portion, and the bearing support portion is spaced apart from the cover portion toward the opening.

3. The motor of claim 1, wherein the stator is configured to be accommodated in the support portion, and
the bearing support portion is configured to be positioned between the stator and the cover portion while the stator is accommodated in the support portion.

4. The motor of claim 1, further comprising a motor cover coupled to the motor body to cover the motor body,
wherein the motor cover includes a guide surface configured to guide air to the impeller when the impeller rotates.

5. The motor of claim 4, wherein the guide surface includes:
a first guide surface spaced apart from the support portion and configured to cover the support portion; and
a second guide surface bent from the first guide surface toward the impeller and extending.

6. The motor of claim 5, wherein the second guide surface is formed to extend from the first guide surface such that an inner surface of the motor cover narrows from the support portion toward the cover portion.

7. The motor of claim 4, wherein the cover portion includes a first coupling portion formed along an outer circumferential surface of the cover portion,
the motor cover includes a second coupling portion formed along an inner circumferential surface of the motor cover, and
the first coupling portion and the second coupling portion are coupled to each other to couple the motor cover to the motor body.

8. The motor of claim 5, wherein the support portion includes:
a support bar extending from the cover portion along a direction parallel to a direction along which the rotation axis extends; and
a support rib formed to protrude from the support bar along a direction crossing the direction along which the rotation axis extends and configured to support the motor cover.

9. The motor of claim 8, wherein the motor cover includes a support groove formed on an inner surface of the motor cover, and
the support rib is inserted into the support groove to support the motor cover on the support portion.

10. The motor of claim 9, wherein the support groove is formed to extend on the first guide surface along a direction parallel to a direction along which the rotation axis extends.

11. The motor of claim 10, wherein the motor cover further includes through-holes formed in the second guide surface such that, while the motor cover is coupled to the motor body, the support bar and the support rib pass through the through-holes.

12. The motor of claim 2, wherein the support portion further includes a plurality of support bars that are spaced apart from the cover portion along an outer circumferential surface of the cover portion along a direction parallel to a direction along which the rotation axis extends, and
the opening is formed between the plurality of support bars spaced apart from each other.

13. The motor of claim 1, wherein the rotor further includes an additional bearing configured to rotatably support the rotor,
wherein the motor body further includes:
a stator insertion hole formed in the support portion such that the stator is inserted therein; and
a cover member coupled to the support portion to cover the stator insertion hole, and
wherein the additional bearing is configured to be coupled to the cover member to rotatably support the rotor.

14. The motor of claim 13, wherein the support portion further includes an insertion hole forming rib arranged along an outer circumference of the stator insertion hole to form the stator insertion hole, and
the stator is configured to be supported by the insertion hole forming rib while inserted into the stator insertion hole.

15. The motor of claim 1, wherein the cover portion further includes a protruding rib protruding inward along an inner circumferential surface of the cover portion, and
while the impeller is covered by the cover portion, the impeller is arranged to contact the protruding rib.
